# EUROPEAN PATENT SPECIFICATION

(11) **EP 3 668 079 B1**
(45) Date of publication and mention of the grant of the patent: **28.09.2022**
(21) Application number: 18896780.6
(22) Date of filing: 15.06.2018
(51) Int. Cl.: H04N 5/225, B06B 1/06, G03B 17/08, B08B 7/02, B60S 1/56, G02B 27/00, G03B 17/02, G03B 17/56

(54) **VIBRATORY DEVICE AND OPTICAL DETECTION DEVICE**
VIBRATIONSVORRICHTUNG UND OPTISCHE DETEKTIONSVORRICHTUNG
DISPOSITIF VIBRATOIRE ET DISPOSITIF DE DÉTECTION OPTIQUE

(30) Priority: 27.12.2017 JP 2017250770
(43) Date of publication of application: 17.06.2020
(73) Proprietor: Murata Manufacturing Co., Ltd., Nagaokakyo-shi, Kyoto 617-8555 (JP)
(72) Inventor: FUJIMOTO, Katsumi, Nagaokakyo-shi, Kyoto 617-8555 (JP); SAKAGUCHI, Hitoshi, Nagaokakyo-shi, Kyoto 617-8555 (JP)
(74) Representative: Zimmermann, Tankred Klaus
(86) International application number: PCT/JP2018/022986
(87) International publication number: WO 2019/130623

(56) References cited:
- WO-A1-2017/022382
- WO-A1-2017/110564
- WO-A1-2017/149933
- US-A1- 2010 060 760
- US-A1- 2012 243 093

## Description

### Technical Field

The present invention relates to a vibrating device for removing foreign matter, such as water droplets or dust, remaining on a dome-like cover and also to an optical detector device that includes the vibrating device.

### Background Art

There have been proposed various types of camera modules in which a light-transmissive member is disposed in front of an imaging element of camera. Patent Document 1 below describes a water-droplet removing device in such a camera module. Patent Document 1 further discloses a vibrating device having a structure in which a cylinder-like body is connected to a dome-like light-transmissive member. The dome-like light-transmissive member is configured to be vibrated in a (m, n) mode. Here, "m" denotes the number of nodal lines present in the radial direction of the circular light-transmissive member and "n" denotes the number of nodal lines present in the circumferential direction thereof. Patent Document 1 describes a (0, 0) mode, a (1, 0) mode, a (0, 1) mode, and a (1, 1) mode.

Water droplets remaining on the surface of the light-transmissive member are removed by vibrating the dome-like light-transmissive member in such modes.

### Citation List

### Patent Document

Patent Document 1: WO2017/110564

Patent documents WO 2017/149933 A1, US2012/0243093 A1 and US 2010/0060760 A1 disclose cylindrically shaped vibrating bodies adapted for cleaning of a light-transmissive member disposed in the field of view of a detector element.

### Summary of Invention

### Technical Problem

The vibrating device described in Patent Document 1, however, does not readily and adequately move liquid droplets remaining on the dome-like light-transmissive member or takes time to atomize liquid droplets.

An object of the present invention is to provide a vibrating device that can move or atomize liquid droplets using larger amplitude vibrations.

Another object of the present invention is to provide an optical detector device that includes the vibrating device.

### Solution to Problem

A vibrating device according to the present invention includes a dome-like cover disposed so as to include a detection field of an optical detector element, a cylinder-like vibrating body to which the cover is fixed, and a piezoelectric element that is fixed to the vibrating body and vibrates the cover via the vibrating body. The vibrating body includes a cylinder portion having a first end portion positioned near the cover and a second end portion positioned opposite to the cover, a cylinder-like first connection portion that is connected to the first end portion of the cylinder portion and formed as a cylinder having an inside diameter larger than that of the cylinder portion, and a first ring-like portion that is connected to the first connection portion at a position near the cover and has an inside diameter smaller than that of the first connection portion. The cover is connected to a surface of the first ring-like portion that is proximate to the cover. The vibrating body also includes a second connection portion that is connected to the second end portion of the cylinder portion and formed as a cylinder having an outside diameter smaller than that of the cylinder portion, and a second ring-like portion that is fixed to a surface of the second connection portion that is opposite to a surface to which the cylinder portion is connected and that has an outside diameter larger than that of the second connection portion. In the vibrating body, the piezoelectric element is fixed to a surface of the second ring-like portion that is opposite to the surface fixed to the second connection portion. Advantageous Effects of Invention

The present invention provides a vibrating device that can vibrate a dome-like cover with a larger amplitude and thereby move and atomize liquid droplets more efficiently. Brief Description of Drawings

[Fig. 1] Fig. 1 is a perspective view illustrating an external appearance of a camera according to a first embodiment of the present invention.
[Fig. 2] Fig. 2 is an elevational cross-sectional view illustrating the camera according to the first embodiment of the present invention.
[Fig. 3] Fig. 3 is an exploded elevational cross-sectional view illustrating the camera according to the first embodiment.
[Fig. 4] Fig. 4 is an elevational cross-sectional view illustrating a structure in a vibrating device according to the first embodiment, in which a dome-like cover, a cylinder-like vibrating body, and a piezoelectric element are joined.
[Fig. 5] Fig. 5 is a perspective view for explanation of a piezoelectric element to be used in the first embodiment.
[Fig. 6] Fig. 6 is an elevational cross-sectional view for explanation of a first example of support structure of the vibrating device according to the first embodiment.
[Fig. 7] Fig. 7 is a perspective view for explanation of a support member used in the support structure illustrated in Fig. 6.
[Fig. 8] Fig. 8 is an elevational cross-sectional view for explanation of a second example of support structure for a vibrating body disposed in the vibrating device according to the first embodiment.
[Fig. 9] Fig. 9 is perspective view illustrating a support member used in the support structure illustrated in Fig. 8.
[Fig. 10] Figs. 10(a), 10(b), and 10(c) are perspective views for explanation of an example of polarization configuration of a ring-like piezoelectric element in a piezoelectric vibrator.
[Fig. 11] Fig. 11 is a diagram for explanation of an (m, n) mode.
[Fig. 12] Fig. 12(a) is a schematic elevational cross-sectional view for explanation of a state of the vibrating device of the first embodiment being not displaced, and Fig. 12(b) is a schematic elevational cross-sectional view for explanation of shape and nodes of vibration in a state of the vibrating device being most displaced in a (0, 0) mode.
[Fig. 13] Fig. 13 is a schematic elevational cross-sectional view for explanation of shape and node positions of vibration when the vibrating device of the first embodiment vibrates in a (0, 1) mode and exhibits a maximum displacement.
[Fig. 14] Fig. 14 is a schematic elevational cross-sectional view for explanation of shape and node positions of vibration when the vibrating device of the first embodiment vibrates in a (0, 2) mode and exhibits a maximum displacement.
[Fig. 15] Fig. 15 is a view illustrating a relationship between a J-dimension ratio and an electromechanical coupling coefficient.
[Fig. 16] Fig. 16 is a view illustrating a relationship between the J-dimension ratio and an amplitude ratio when the (0, 2) mode is used.
[Fig. 17] Fig. 17 is a view illustrating a relationship between the J-dimension ratio and the amplitude ratio when the (0, 1) mode is used.
[Fig. 18] Fig. 18 is a view illustrating a relationship between the J-dimension ratio and the amplitude ratio when the (0, 0) mode is used.

### Description of Embodiment

The present invention will be elucidated by specifically describing an embodiment of the invention with reference to the drawings.

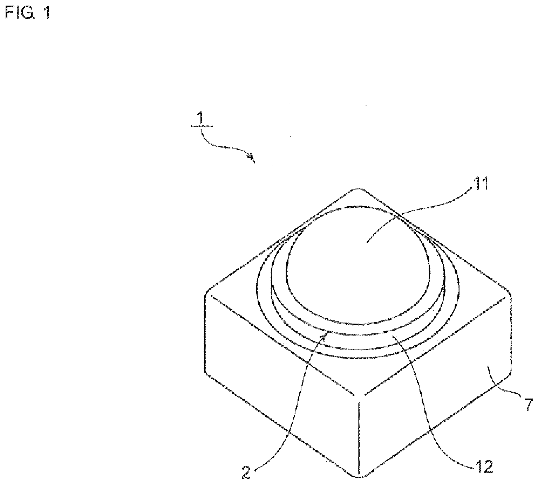

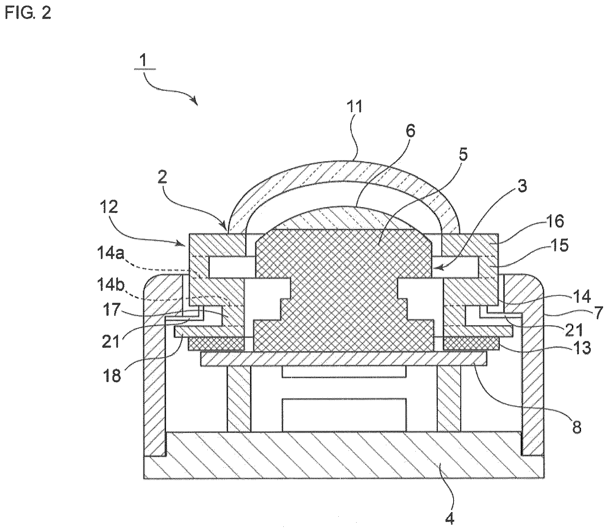

Fig. 1 is a perspective view illustrating an external appearance of a camera according to a first embodiment of the present invention, and Fig. 2 is an elevational cross-sectional view illustrating the camera according to the first embodiment.

A camera 1 includes a vibrating device 2 that serves as a water-droplet removing device and a camera body 3. The camera body 3 is fixed onto a base plate 4. An imaging unit 5 is disposed at the top end of the camera body 3. The imaging unit 5 contains therein a circuit having an imaging element. A lens module 6 is fixed at the top end of the imaging unit 5. A cylinder-like casing member 7 is disposed on the base plate 4. Part of the vibrating device 2 is disposed inside the casing member 7.

The vibrating device 2 has a dome-like cover 11. The dome-like cover 11 is a light-transmissive member made of, for example, glass or plastic. The dome-like cover 11 may be configured such that only a portion of the dome-like cover 11 positioned within the camera's field of view may be formed of a light-transmissive member.

In the vibrating device 2, a cylinder-like vibrating body 12 is fixed to the dome-like cover 11. A piezoelectric element 13 is fixed to the bottom end of the cylinder-like vibrating body 12. Actuating the piezoelectric element 13 vibrates the entire vibrating portion including the piezoelectric element 13, the vibrating body 12, and the cover 11.

A first connection portion 15 and a second connection portion 17 are also shaped like cylinders. In addition, a first ring-like portion 16 and a second ring-like portion 18 are formed as annularly shaped plates. The "annularly shaped plate" refers to a plate having a radial dimension being larger than the thickness. However, the first and second ring-like portions 16 and 18 are not limited to such annularly shaped plates.

The vibrating body 12 includes a cylinder portion 14, the first connection portion 15, the first ring-like portion 16, the second connection portion 17, and the second ring-like portion 18. In the present embodiment, as illustrated in Fig. 2, the cylinder portion 14, the first connection portion 15, the first ring-like portion 16, the second connection portion 17, and the second ring-like portion 18 are formed integrally so as to have respective central axes coaxially. In Fig. 2, boundary surfaces between these elements are indicated by dotted lines. This structure, however, may be formed by joining separate members together.

The cylinder portion 14 has a first end portion 14a positioned near the cover 11 and a second end portion 14b positioned opposite to the cover 11. The first connection portion 15 is connected to the first end portion 14a. The first ring-like portion 16 is connected to the first connection portion 15 at a position near the cover 11. The cover 11 is fixed to a surface of the first ring-like portion 16 positioned near the cover 11. The second connection portion 17 is connected to the second end portion 14b. The second ring-like portion 18 is fixed to a surface of the second connection portion 17 that is opposite to the surface to which the cylinder portion 14 is connected.

The inside diameter of the first connection portion 15 is larger than that of the cylinder portion 14. The outside diameter of the first connection portion 15 is the same as that of the cylinder portion 14. The inside diameter of the first ring-like portion 16 is smaller than that of the first connection portion 15. The outside diameter of the first ring-like portion 16 is the same as the outside diameter of the cylinder portion 14. In other words, the first connection portion 15 is disposed between the first ring-like portion 16 and the cylinder portion 14 at a position near the outer circumferential surfaces thereof. Accordingly, the first ring-like portion 16 is shaped so as to protrude inward in the radial direction from an end portion of the first connection portion 15 near the cover 11. The first ring-like portion 16 is a vibrating plate that is shaped like a ring.

In addition, the inside diameter of the second connection portion 17 having a cylinder-like shape is the same as that of the cylinder portion 14. The outside diameter of the second connection portion 17 is smaller than that of the cylinder portion 14.

The second connection portion 17 is disposed such that the inner circumferential surface thereof is flush with that of the cylinder portion 14.

The outside diameter of the second ring-like portion 18 is larger than that of the second connection portion 17. The inside diameter of the second ring-like portion 18 is the same as that of the second connection portion 17. The second ring-like portion 18 is disposed such that the inner circumferential surface thereof is flush with that of the second connection portion 17. In other words, the second connection portion 17 is disposed between the cylinder portion 14 and the second ring-like portion 18 at a position near the inner circumferential surfaces thereof and is disposed further inward relative to the first connection portion 15. Accordingly, in the vibrating device 2, the cylinder-like vibrating body 12 has a cross section shaped like the letter S as illustrated in Fig. 2, which is the cross-sectional view taken in the radial direction.

Note that the outside diameter of the second ring-like portion 18 is made larger than the outside diameter of the cylinder portion 14. In the present embodiment, the second ring-like portion 18 is a ring-shaped vibrating plate. More specifically, the second ring-like portion 18 is a flange that protrude radially outward from the outer circumferential edge of the second connection portion 17.

The piezoelectric element 13 has a ring-like shape. In the vibrating device 2, the ring-like piezoelectric element 13 is actuated so as to vibrate in the up-down direction. This causes the cylinder-like vibrating body 12 and the cover 11, which are fixed to the ring-like piezoelectric element, to vibrate.

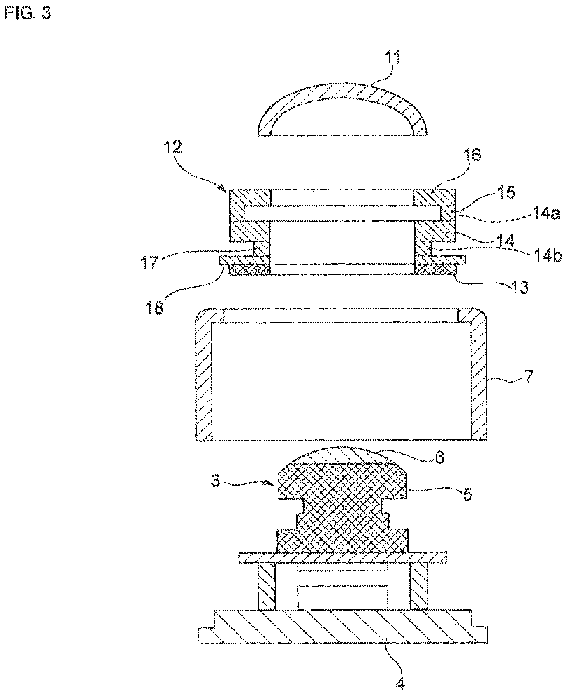

Fig. 3 is an exploded elevational cross-sectional view illustrating the camera 1 for explanation of the structure thereof.

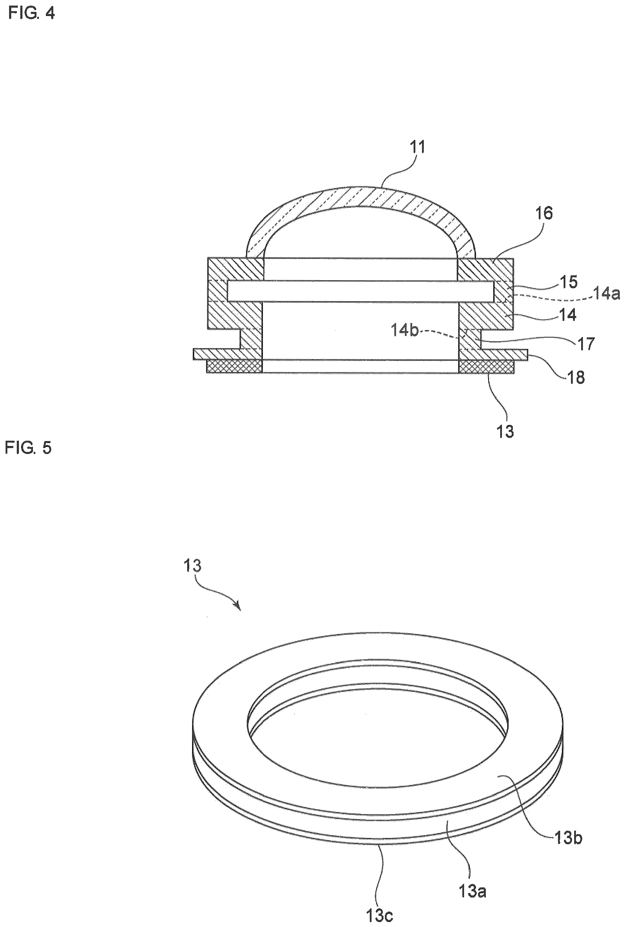

Fig. 4 is an elevational cross-sectional view illustrating a structure in which the cylinder-like vibrating body 12, the piezoelectric element 13, and the cover 11 are joined to each other.

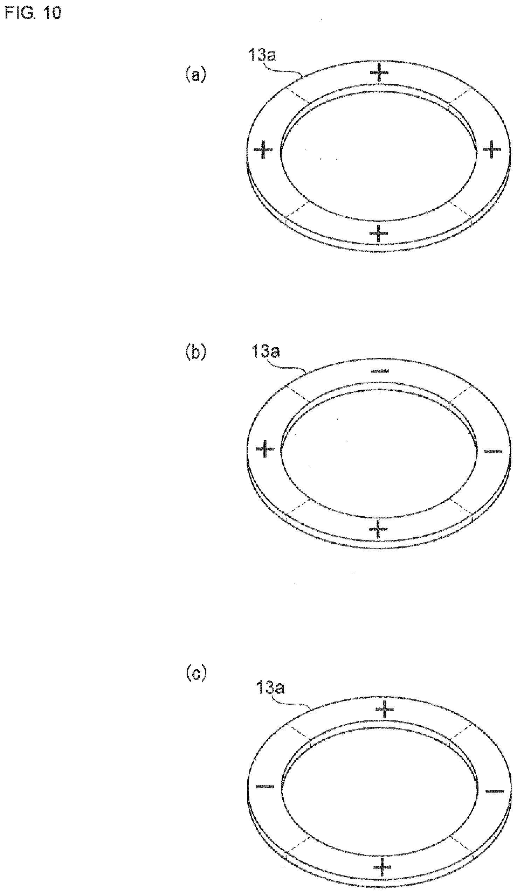

Fig. 5 is a perspective view illustrating the piezoelectric element 13. The piezoelectric element 13 has a ring-like piezoelectric body 13a and electrodes 13b and 13c, and the electrodes 13b and 13c are fixed to respective principal surfaces of the piezoelectric body 13a. Here, the ring-like piezoelectric body 13a has an annular shape. However, the ring-like piezoelectric body 13a may have a ring-like shape other than the annular shape. Moreover, the piezoelectric body 13a need not be shaped like a ring. The piezoelectric element may have a structure in which multiple rectangular-plate-like piezoelectric bodies are arranged in the circumferential direction of the piezoelectric element. The piezoelectric body 13a is configured so as to have multiple regions that are arranged in the circumferential direction and in which respective polarization directions are configured differently in the thickness direction, which will be described later with reference to Figs. 10(a) to 10(c). The piezoelectric body 13a thereby vibrates so as to oscillate in the up-down direction when an alternating electric field is applied between the electrodes 13b and 13c.

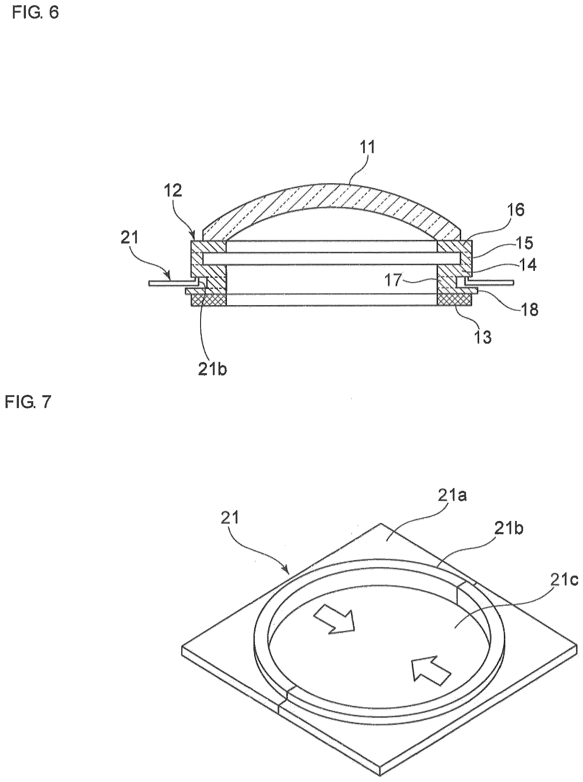

Fig. 6 is an elevational cross-sectional view illustrating a first example of a support structure that supports the structure of Fig. 4 from outside. A support plate 21 illustrated in Fig. 7 is used here. The support plate 21 has a plate body 21a and a cylinder-like support wall 21b that surrounds a circular opening 21c formed in the plate body 21a. The support wall 21b is integrally formed with the plate body 21a. The bottom surface of the cylinder portion 14 is disposed on the top surface of the support wall 21b, thereby supporting the vibrating body 12.

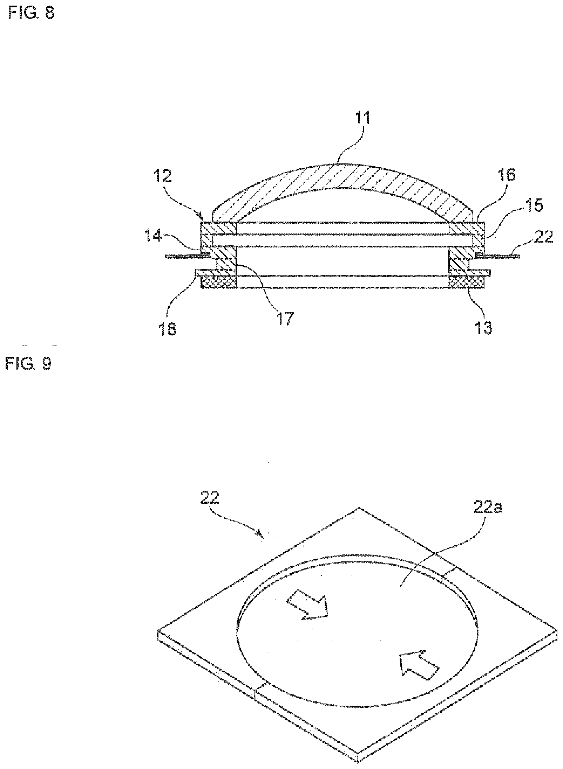

Fig. 8 is an elevational cross-sectional view for explanation of a second example of the structure that supports the vibrating body 12 from outside. Fig. 9 is perspective view illustrating a support member used in the support structure illustrated in Fig. 8. A support member 22 is a rectangularly shaped plate having a circular opening 22a at the center thereof. As illustrated in Fig. 8, the inner circumferential surface of the support member 22 is in contact with the side surface of the cylinder portion 14. The support member 22 thereby supports the vibrating body 12.

Note that the structure for supporting the vibrating body 12 is not limited to the first and second examples described above.

Figs. 10(a) to 10(c) are perspective views for explanation of an example of polarization configuration in the piezoelectric element. In Figs. 10(a) to 10(c), only the piezoelectric body 13a of Fig. 5 is illustrated, in which polarization directions of respective regions are depicted.

In Figs. 10(a) to 10(c), the region marked by "+" refers to a region in which the polarization axis extends in the thickness direction of the piezoelectric body 13a from the bottom surface thereof to the top surface. On the other hand, the region marked by "-" refers to a region in which the polarization axis extends in the thickness direction of the piezoelectric body 13a from the top surface thereof to the bottom surface.

In Fig. 10(a), all of the polarization directions of the regions arranged in the circumferential direction are oriented in the same direction.

In Fig. 10(b), on the other hand, in four regions separated along the circumference of the piezoelectric body, opposing regions straddling the center have opposite polarization directions.

In Fig. 10(c), in four regions separated along the circumference of the piezoelectric body, opposing regions straddling the center have the same polarization directions.

When the piezoelectric body 13a illustrated in Fig. 10(a) is used, vibrations of the (0, 0) mode, which will be described later, are generated in the dome-like cover 11 by actuating the ring-like piezoelectric element and causing the vibrating device 2 to vibrate. On the other hand, when the polarization configuration of the piezoelectric body 13a illustrated in Fig. 10(b) is used, vibrations of the (0, 1) mode are generated in the dome-like cover 11.

When the polarization configuration of the piezoelectric body 13a illustrated in Fig. 10(c) is used, vibrations of the (0, 2) mode are generated in the dome-like cover 11.

In the present embodiment, the vibrating device 2 uses the (0, 0) mode, the (0, 1) mode, and the (0, 2) mode, which will be described later in detail. Note that as described previously, in the term "(m, n) mode", "m" denotes the number of nodal lines present in the radial direction and "n" denotes the number of nodal lines present in the circumferential direction, in which "m" and "n" are integers.

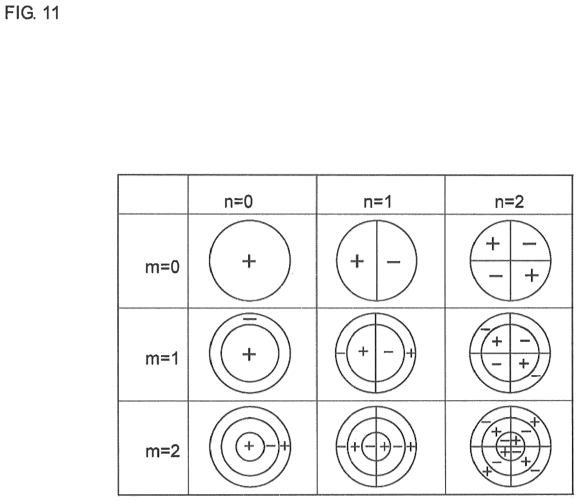

The (m, n) mode is depicted schematically in Fig. 11. Here, phases of vibration in regions of the cover 11 are illustrated when the cover 11 is viewed in plan. In Fig. 11, the region marked with "+" and the region marked with "-" vibrate in opposite phases.

Among such (m, n) modes, the vibrating device according to the present invention uses the (0, 0) mode, the (0, 1) mode, and the (0, 2) mode.

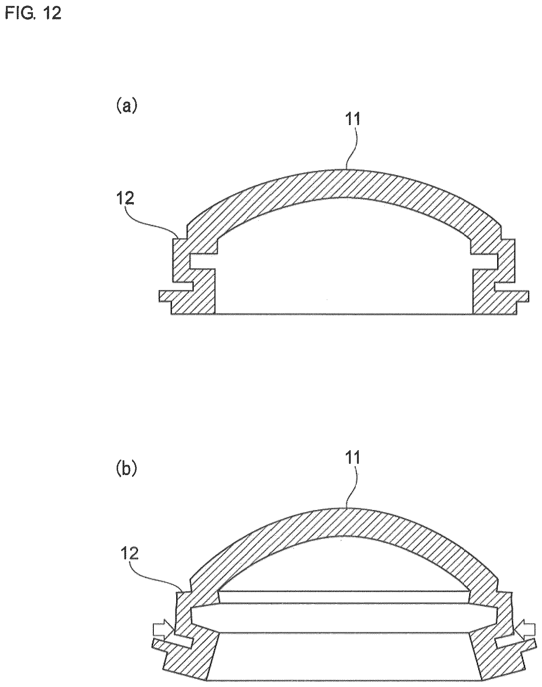

Fig. 12(a) is a schematic elevational cross-sectional view for explanation of a state of the vibrating device of the first embodiment being not displaced, and Fig. 12(b) is a schematic elevational cross-sectional view for explanation of shape and nodes of vibration in a state of the vibrating device being most displaced in the (0, 0) mode. In Fig. 12(b), arrows indicate positions of vibration nodes.

As illustrated in Fig. 12(b), the dome-like cover 11 is displaced to its maximum at the center thereof in the (0, 0) mode. This enables a liquid present in a central region of the cover 11 to move largely. This makes it easier to atomize the liquid present in the central region.

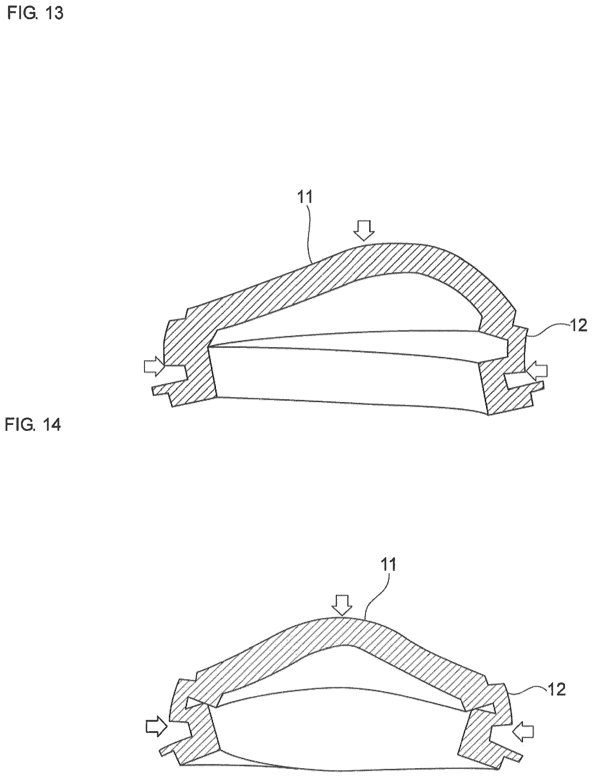

Fig. 13 is a schematic elevational cross-sectional view illustrating the shape and node positions of vibration in a state of the vibrating device being most displaced in the (0, 1) mode of vibration. The positions of vibration nodes are also indicated by arrows. In the (0, 1) mode, one side region and the other side region of the cover 11 with respect to the center thereof are largely displaced in an alternating manner. Accordingly, with the (0, 1) mode, liquid droplets remaining on the outside surface of the dome-like cover 11 can be moved dispersedly to areas on the cover 11 other than the center and can be atomized. A small amount of liquid droplets remaining in the working region is atomized at the center by changing the vibration mode, which enables liquid droplets to be removed without increasing the amplitude of vibration. Fig. 14 is a schematic elevational cross-sectional view illustrating the shape and node positions of vibration in a state of the vibrating device being most displaced in the (0, 2) mode of vibration. In the (0, 2) mode illustrated in Fig. 14, as is the case for the (0, 1) mode, liquid droplets can be moved dispersedly when liquid droplets are located at positions other than the center of the cover 11 and near vibrating points. Consequently, a small amount of liquid droplets remaining on nodes is atomized at the center, which enables liquid droplets to be removed without increasing the amplitude of vibration.

Note that vibration nodes are not generated in the cover 11 in the (0, 0) mode. This does not disturb the field of view. No nodal line extends in the circumferential direction in the cover 11 in any of the (0, 0) mode, the (0, 1) mode, and the (0, 2) mode. This is because the vibrating body 12 has a structure of which the cross section taken in the radial direction is shaped like the letter S. Due to the vibrating body 12 having such a structure, nodal lines extending in the circumferential direction as occurring in a (1, 0) mode, a (1, 1) mode, or a (1, 2) mode are relocated to a middle portion of the vibrating body 12 in the thickness direction thereof. If the vibrating body 12 was a one-piece ring-like vibrating body, a nodal line extending in the circumferential direction would be present within the cover. In the present embodiment, however, the vibrating body has the radial cross section shaped like the letter S, which enables nodal lines, except for radially extending nodal lines, to be positioned out of the field of view.

In the present invention, the cylinder portion 14 is disposed in such a manner that the second end portion 14b thereof is positioned within a range of 1/2 ± 40% of dimension of cylinder-like vibrating body 12 in a direction extending between the first end portion 14a of the cylinder portion 14 and the second end portion 14b thereof (in other words, in a direction parallel to the central axis of the cylinder portion 14). As a result, the cylinder-like vibrating body 12 of the vibrating device 2 can be supported by the support structure illustrated in Fig. 6 or the support structure illustrated in Fig. 8 without hindering vibration of the vibrating body 12.

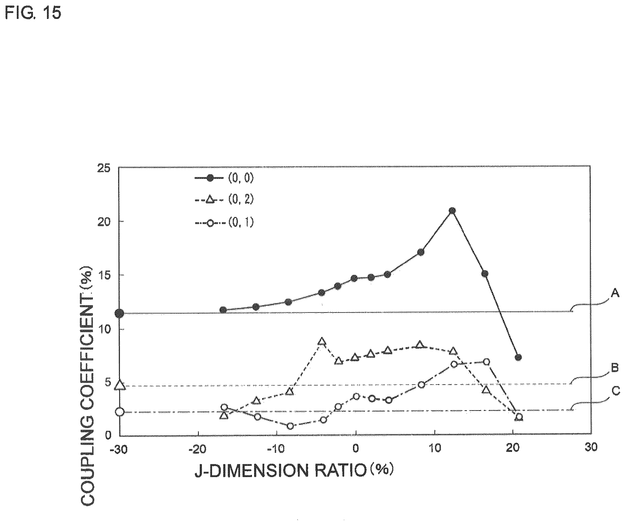

The present inventors have found that when the outside diameter of the second ring-like portion 18 is denoted by "J" and the outside diameter of the cylinder portion 14 is denoted by "D" in the vibrating device 2, the cover 11 can be vibrated largely if a J-dimension ratio, which is expressed as (J-D)/D, falls within a specific range. The following explains this point with reference to Figs. 15 to 18.

Fig. 15 is a view illustrating a relationship between the J-dimension ratio and an electromechanical coupling coefficient in the (0, 0) mode, the (0, 1) mode, or the (0, 2) mode. The electromechanical coupling coefficient indicates an efficiency of conversion of an electrical input into a mechanical output. The electromechanical coupling coefficient is calculated with respect to a bandwidth when the vibrating device is assumed as a resonator. If the electromechanical coupling coefficient is small, the amplitude attenuates sharply with the frequency deviating only slightly from a peak amplitude frequency even if the amount of peak amplitude is the same. This makes it difficult to maintain the amplitude. In Fig. 15, lines denoted by A, B, and C indicate the electromechanical coupling coefficients for the (0, 0) mode, the (0, 1) mode, and the (0, 2) mode, respectively, when the outside diameter of the second connection portion is equal to D. In other words, a case of the electromechanical coupling coefficient becoming lower than the line A; B, or C means that it is not necessary to provide the second connection portion. In order to obtain the effect of providing the structure of the S-shaped cross section, the J-dimension ratio is set such that the corresponding coupling coefficient becomes higher than the line A, B, or C.

Accordingly, in the (0, 0) mode, the J-dimension ratio is preferably in a range of -16% or more and +19% or less. In the (0, 2) mode, the J-dimension ratio is preferably in a range of -8% or more and +16% or less. In the (0, 1) mode, the J-dimension ratio is preferably in a range of -3% or more and +20% or less.

In the case of the vibrating device 2 that utilizes these three modes, it is more desirable that the J-dimension ratio be +16% or less, and at the same time, the J-dimension ratio be -3% or more.

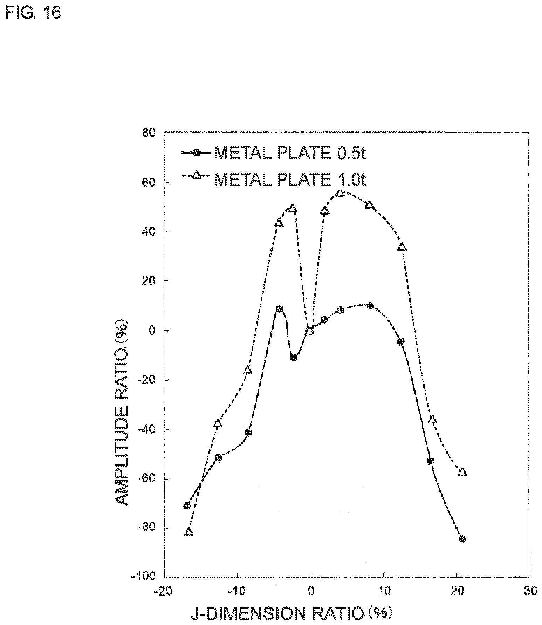

Fig. 16 is a view illustrating a relationship between the J-dimension ratio and an amplitude ratio (%) when the (0, 2) mode of vibration is used. Here, the amplitude ratio (%) is a percentage (%) of increase or decrease of amplitude with respect to the amplitude when J = D.

In Fig. 16, the solid line represents results when the second ring-like portion 18 is formed of a metal plate having a thickness of 0.5t, whereas the dotted line represents results for the metal plate having a thickness of 1.0t. Note that t = 1.0 mm.

As shown in Fig. 16, in any of the two thickness cases of the second ring-like portion 18, a large amplitude can be obtained in the case of the J-dimension ratio falling in the range of -6% or more and -4% or less on the "-" side and in the range of -0% or more and 12% or less on the "+" side.

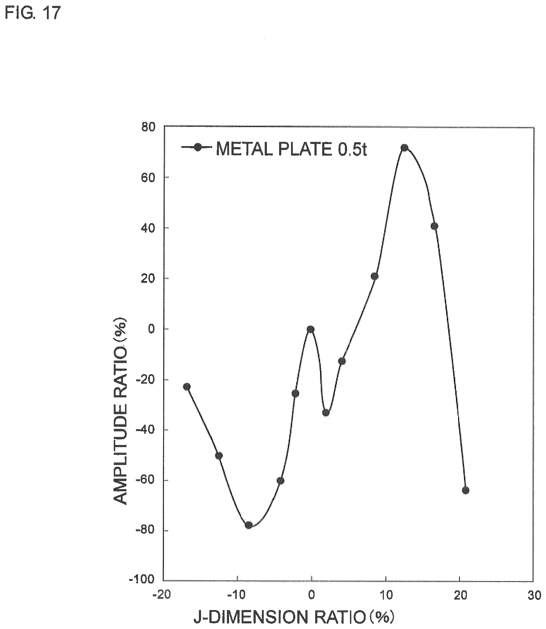

Fig. 17 is a view illustrating a relationship between the J-dimension ratio and the amplitude ratio (%) when the (0, 1) mode of vibration is used. Here, the thickness of the metal plate serving as the second ring-like portion 18 was 0.5t.

In the case of the (0, 1) mode, as shown in Fig. 17, it is preferable that the j-dimension ratio be in the vicinity of 0% or in the range of 5% or more and 15% or less. It is shown that a larger amplitude can be thereby obtained.

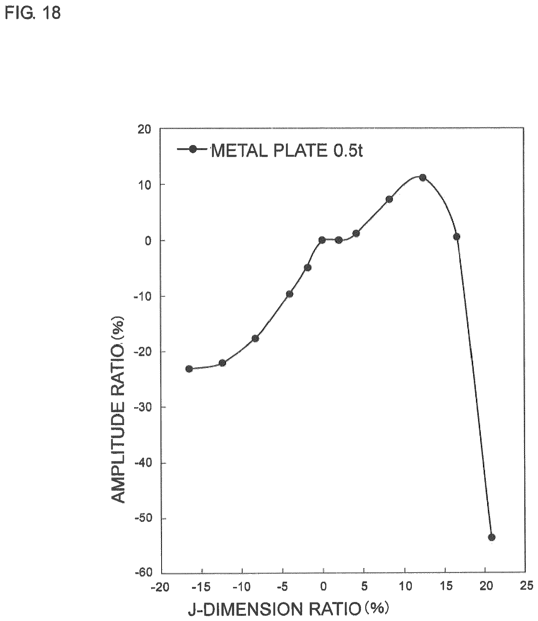

Fig. 18 is a view illustrating a relationship between the J-dimension ratio and the amplitude ratio (%) when the (0, 0) mode of vibration is used.

As shown in Fig. 18, it is preferable that the j-dimension ratio be in the range of 0% or more and 12% or less in the case of the (0, 0) mode. It is shown that a larger amplitude can be obtained in such a case.

In the present invention, it is preferable that the vibrating portion formed as the dome-like cover be vibrated in the (0, 0) mode, the (0, 1) mode, and the (0, 2) mode. In such a case, as shown in Figs. 15 to 18, the J-dimension ratio preferably stays in the range of 5% or more and 12% or less for any one of the modes. This enables liquid droplets, such as water droplets, remaining on the outside surface of the cover 11 to move largely and to be atomized and thereby removed.

However, if any one of the (0, 0) mode, the (0, 1) mode, and the (0, 2) mode is used or if any two of these are used, it is sufficient to use a corresponding preferable range of the J-dimension ratio shown in Figs. 16 to 18.

The J-dimension ratio is preferably in the range of 5% or more and 15% or less. However, in the present invention, the cover 11 can be vibrated in the (0, 0) mode, the (0, 1) mode, or the (0, 2) mode as described above, provided that the outside diameter of the second ring-like portion 18 is made different from the outside diameter of the cylinder portion 14. It is preferable that the second ring-like portion 18 be provided so as to have the outside diameter slightly different from the outside diameter of the cylinder portion 14, which can stabilize the electromechanical coupling coefficient.

In the above embodiment, the imaging element is used as an optical detector element, and the field of view is a detection field. However, the optical detector element may be an element for optically detecting activation energy. In this case, at least one of infrared beams and electromagnetic waves can be preferably used as the activation energy beams.

An optical detector device according to the present invention includes the vibrating device and the optical detector element. The optical detector element is disposed in at least part of internal space of cylindrically formed vibrating body of the vibrating device. The optical detector element has the detection field in the cover. Accordingly, the optical detector device according to the present invention is not limited to a camera. For example, the present invention may be applied to an on-board radar device known as "RADAR" or "LiDAR".

### Reference Signs List

- 1: camera
- 2: vibrating device
- 3: camera body
- 4: base plate
- 5: imaging unit
- 6: lens module
- 7: casing member
- 11: cover
- 12: vibrating body
- 13: piezoelectric element
- 13a: piezoelectric body
- 13b, 13c: electrode
- 14: cylinder portion
- 14a, 14b: first end portion, second end portion
- 15: first connection portion
- 16: first ring-like portion
- 17: second connection portion
- 18: second ring-like portion
- 21: support plate
- 21a: plate body
- 21b: support wall
- 21c: opening
- 22: support member
- 22a: opening

## Claims

1. A vibrating device (2) comprising:
a dome-like cover (11) disposed so as to include a detection field of an optical detector element (5);
a cylinder-like vibrating body (12) to which the cover is fixed; and
a piezoelectric element (13) that is fixed to the vibrating body and vibrates the cover via the vibrating body, wherein
the vibrating body includes
a cylinder portion (14) having a first end portion (14a) positioned near the cover and a second end portion (14b) positioned opposite to the cover,
a cylinder-like first connection portion (15) that is connected to the first end portion of the cylinder portion and formed as a cylinder having an inside diameter larger than that of the cylinder portion,
a first ring-like portion (16) that is connected to the first connection portion at a position near the cover and has an inside diameter smaller than that of the first connection portion, the cover being connected to a surface of the first ring-like portion that is proximate to the cover,
a second connection portion (17) that is connected to the second end portion of the cylinder portion and formed as a cylinder having an outside diameter smaller than that of the cylinder portion, and
a second ring-like portion (18) that is fixed to a surface of the second connection portion that is opposite to a surface to which the cylinder portion is connected and that has an outside diameter larger than that of the second connection portion, and
the piezoelectric element is fixed to a surface of the second ring-like portion that is opposite to the surface fixed to the second connection portion.

2. The vibrating device according to Claim 1, wherein
the second end portion of the cylinder portion is positioned within a range of 1/2 ± 40% of dimension of the cylinder-like vibrating body in a direction extending between the first end portion of the cylinder portion and the second end portion thereof.

3. The vibrating device according to Claim 1 or 2, wherein
the outside diameter of the second ring-like portion is different from the outside diameter of the cylinder portion.

4. The vibrating device according to any one of Claims 1 to 3, wherein
a difference obtained from a formula of (the outside diameter of the second ring-like portion - the outside diameter of the cylinder portion) is +16% or less of the outside diameter of the cylinder portion.

5. The vibrating device according to any one of Claims 1 to 3, wherein
a vibrating portion including the vibrating body and the cover vibrates in a (0, 0) mode.

6. The vibrating device according to Claim 5, wherein
a difference obtained from a formula of (the outside diameter of the second ring-like portion - the outside diameter of the cylinder portion) is 0% or more and 15% or less of the outside diameter of the cylinder portion.

7. The vibrating body according to any one of Claims 1 to 3, wherein
a vibrating portion including the vibrating body and the cover vibrates in a (0, 1) mode.

8. The vibrating device according to Claim 7, wherein
a difference obtained from a formula of (the outside diameter of the second ring-like portion - the outside diameter of the cylinder portion) is in a vicinity of 0% of the outside diameter of the cylinder portion or in a range of 5% or more and +15% or less of the outside diameter thereof.

9. The vibrating body according to any one of Claims 1 to 3, wherein
a vibrating portion including the vibrating body and the cover vibrates in a (0, 2) mode.

10. The vibrating device according to Claim 9, wherein
a difference obtained from a formula of (the outside diameter of the second ring-like portion - the outside diameter of the cylinder portion) is in a range of -6% or more and -4% or less of the outside diameter of the cylinder portion or in a range of 0% or more and +12% or less of the outside diameter thereof.

11. The vibrating device according to any one of Claims 1 to 10, wherein
the outside diameter of the cylinder portion is equal to an outside diameter of the first connection portion.

12. The vibrating device according to any one of Claims 1 to 11, wherein
the second ring-like portion is a vibrating plate shaped like a ring.

13. The vibrating device according to Claim 12, wherein
the second ring-like portion is a flange that protrudes radially outward from an outer circumferential edge of the second connection portion.

14. The vibrating device according to any one of Claims 1 to 13, wherein
an outside diameter of the piezoelectric element that is shaped like a ring is equal to the outside diameter of the cylinder portion.

15. The vibrating device according to any one of Claims 1 to 14, wherein
the cover is formed of a light-transmissive member.

16. An optical detector device comprising:
the vibrating device according to any one of Claims 1 to 15; and
the optical detector element that is disposed in at least part of an internal space of the cylinder-like vibrating body of the vibrating device and has the detection field in the cover.

17. The optical detector device according to Claim 16, wherein
the optical detector element is an imaging element, and the detection field is a field of view.

18. The optical detector device according to Claim 16, wherein
the optical detector element is an element that optically detects activation energy beams.

19. The optical detector device according to Claim 18, wherein the activation energy beams are at least one of infrared beams and electromagnetic waves.

## Patentansprüche

1. Eine Schwingvorrichtung (2), die folgende Merkmale aufweist:
eine kuppelartige Abdeckung (11), die so angeordnet ist, dass sie ein Erfassungsfeld eines optischen Detektorelements (5) einschließt;
einen zylinderartigen Schwingkörper (12), an dem die Abdeckung fixiert ist; und
ein piezoelektrisches Element (13), das an dem Schwingkörper fixiert ist und die Abdeckung über den Schwingkörper zum Schwingen bringt, wobei der Schwingkörper Folgendes aufweist:
einen Zylinderabschnitt (14) mit einem ersten Endabschnitt (14a), der nahe der Abdeckung positioniert ist, und einem zweiten Endabschnitt (14b), der gegenüber von der Abdeckung positioniert ist,
einen zylinderartigen ersten Verbindungsabschnitt (15), der mit dem ersten Endabschnitt des Zylinderabschnitts verbunden ist und als ein Zylinder mit einem Innendurchmesser gebildet ist, der größer ist als der des Zylinderabschnitts,
einen ersten ringartigen Abschnitt (16), der mit dem ersten Verbindungsabschnitt an einer Position nahe der Abdeckung verbunden ist und einen Innendurchmesser aufweist, der kleiner ist als der des ersten Verbindungsabschnitts, wobei die Abdeckung mit einer Oberfläche des ersten ringartigen Abschnitts verbunden ist, die nahe an der Abdeckung liegt,
einen zweiten Verbindungsabschnitt (17), der mit dem zweiten Endabschnitt des Zylinderabschnitts verbunden und als ein Zylinder mit einem Außendurchmesser gebildet ist, der kleiner ist als der des Zylinderabschnitts, und
einen zweiten ringartigen Abschnitt (18), der an einer Oberfläche des zweiten Verbindungsabschnitts fixiert ist, die gegenüber von einer Oberfläche liegt, mit der der Zylinderabschnitt verbunden ist, und der einen Außendurchmesser aufweist, der größer ist als der des zweiten Verbindungsabschnitts, und
das piezoelektrische Element an einer Oberfläche des zweiten ringartigen Abschnitts fixiert ist, die gegenüber von der Oberfläche liegt, die an dem zweiten Verbindungsabschnitt fixiert ist.

2. Die Schwingvorrichtung gemäß Anspruch 1, bei der
der zweite Endabschnitt des Zylinderabschnitts innerhalb eines Bereichs von 1/2 ± 40% einer Abmessung des zylinderartigen Schwingkörpers in einer Richtung positioniert ist, die sich zwischen dem ersten Endabschnitt des Zylinderabschnitts und dem zweiten Endabschnitt desselben erstreckt.

3. Die Schwingvorrichtung gemäß Anspruch 1 oder 2, bei der
der Außendurchmesser des zweiten ringartigen Abschnitts sich von dem Außendurchmesser des Zylinderabschnitts unterscheidet.

4. Die Schwingvorrichtung gemäß einem der Ansprüche 1 bis 3, bei der
eine Differenz, die aus einer Formel (Außendurchmesser des zweiten ringartigen Abschnitts - Außendurchmesser des Zylinderabschnitts) erhalten wird, +16% oder weniger des Außendurchmessers des Zylinderabschnitts beträgt.

5. Die Schwingvorrichtung gemäß einem der Ansprüche 1 bis 3, bei der
ein Schwingabschnitt, der den Schwingkörper und die Abdeckung beinhaltet, in einer (0,0)-Mode schwingt.

6. Die Schwingvorrichtung gemäß Anspruch 5, bei der
eine Differenz, die aus einer Formel (Außendurchmesser des zweiten ringartigen Abschnitts - Außendurchmesser des Zylinderabschnitts) erhalten wird, 0% oder mehr und 15% oder weniger des Außendurchmessers des Zylinderabschnitts beträgt.

7. Der Schwingkörper gemäß einem der Ansprüche 1 bis 3, bei dem
ein Schwingabschnitt, der einen Schwingkörper und eine Abdeckung beinhaltet, in einer (0,1)-Mode schwingt.

8. Die Schwingvorrichtung gemäß Anspruch 7, bei der
eine Differenz, die aus einer Formel von (Außendurchmesser des zweiten ringartigen Abschnitts - Außendurchmesser des Zylinderabschnitts) erhalten wird, in einer Umgebung von 0% des Außendurchmessers des Zylinderabschnitts oder in einem Bereich von 5% oder mehr und +15% oder weniger des Außendurchmessers desselben liegt.

9. Der Schwingkörper gemäß einem der Ansprüche 1 bis 3, bei dem
ein Schwingabschnitt, der den Schwingkörper und die Abdeckung beinhaltet, in einer (0,2)-Mode schwingt.

10. Die Schwingvorrichtung gemäß Anspruch 9, bei der
eine Differenz, die aus einer Formel (Außendurchmesser des zweiten ringartigen Abschnitts - Außendurchmesser des Zylinderabschnitts) erhalten wird, in einem Bereich von -6% oder mehr und -4% oder weniger des Außendurchmessers des Zylinderabschnitts oder in einem Bereich von 0% oder mehr und +12% oder weniger des Außendurchmessers desselben liegt.

11. Die Schwingvorrichtung gemäß einem der Ansprüche 1 bis 10, bei der
der Außendurchmesser des Zylinderabschnitts gleich einem Außendurchmesser des ersten Verbindungsabschnitts ist.

12. Die Schwingvorrichtung gemäß einem der Ansprüche 1 bis 11, bei der
der zweite ringartige Abschnitt eine Schwingplatte ist, die wie ein Ring geformt ist.

13. Die Schwingvorrichtung gemäß Anspruch 12, bei der
der zweite ringartige Abschnitt ein Flansch ist, der von einem Außenumfangsrand des zweiten Verbindungsabschnitts radial nach außen vorsteht.

14. Die Schwingvorrichtung gemäß einem der Ansprüche 1 bis 13, bei der
ein Außendurchmesser des piezoelektrischen Elements, das wie ein Ring geformt ist, gleich dem Außendurchmesser des Zylinderabschnitts ist.

15. Die Schwingvorrichtung gemäß einem der Ansprüche 1 bis 14, bei der
die Abdeckung aus einem lichtdurchlässigen Bauteil gebildet ist.

16. Eine optische Detektorvorrichtung, die folgende Merkmale aufweist:
die Schwingvorrichtung gemäß einem der Ansprüche 1 bis 15; und
das optische Detektorelement, das in zumindest einem Teil eines Innenraums des zylinderartigen Schwingkörpers der Schwingvorrichtung angeordnet ist und das Erfassungsfeld in der Abdeckung aufweist.

17. Die optische Detektorvorrichtung gemäß Anspruch 16, bei der
das optische Detektorelement ein Bilderzeugungselement ist und das Erfassungsfeld ein Sichtfeld ist.

18. Die optische Detektorvorrichtung gemäß Anspruch 16, bei der
das optische Detektorelement ein Element ist, das Aktivierungsenergiestrahlen optisch erfasst.

19. Die optische Detektorvorrichtung gemäß Anspruch 18,
bei der die Aktivierungsenergiestrahlen Infrarotstrahlen und/oder elektromagnetische Wellen sind.

## Revendications

1. Dispositif vibrant (2) comprenant :
un couvercle en forme de dôme (11) disposé afin de comprendre un champ de détection d'un élément de détecteur optique (5) ;
un corps vibrant en forme de cylindre (12) auquel le couvercle est fixé ; et
un élément piézoélectrique (13) qui est fixé sur le corps vibrant et fait vibrer le couvercle via le corps vibrant, dans lequel :
le corps vibrant comprend :
une partie cylindrique (14) ayant une première partie d'extrémité (14a) positionnée à proximité du couvercle et une seconde partie d'extrémité (14b) positionnée à l'opposé du couvercle,
une première partie de raccordement en forme de cylindre (15) qui est raccordée à la première partie d'extrémité de la partie cylindrique et formée comme un cylindre ayant un diamètre intérieur supérieur à celui de la partie cylindrique,
une première partie de forme annulaire (16) qui est raccordée à la première partie de raccordement dans une position à proximité du couvercle et a un diamètre intérieur inférieur à celui de la première partie de raccordement, le couvercle étant raccordé à une surface de la première partie de forme annulaire qui est à proximité du couvercle,
une seconde partie de raccordement (17) qui est raccordée à la seconde partie d'extrémité de la partie cylindrique et formée comme un cylindre ayant un diamètre extérieur inférieur à celui de la partie cylindrique, et
une seconde partie de forme annulaire (18) qui est fixée sur une surface de la seconde partie de raccordement qui est à l'opposé d'une surface à laquelle la partie cylindrique est raccordée et qui a un diamètre extérieur supérieur à celui de la seconde partie de raccordement, et
l'élément piézoélectrique est fixé sur une surface de la seconde partie de forme annulaire qui est à l'opposé de la surface fixée sur la seconde partie de raccordement.

2. Dispositif vibrant selon la revendication 1, dans lequel :
la seconde partie d'extrémité de la partie cylindrique est positionnée dans une plage de 1/2 ± 40% de dimension du corps vibrant en forme de cylindre dans une direction s'étendant entre la première partie d'extrémité de la partie cylindrique et sa seconde partie d'extrémité.

3. Dispositif vibrant selon la revendication 1 ou 2, dans lequel :
le diamètre extérieur de la seconde partie de forme annulaire est différent du diamètre extérieur de la partie cylindrique.

4. Dispositif vibrant selon l'une quelconque des revendications 1 à 3, dans lequel :
une différence obtenue à partir d'une formule de (le diamètre extérieur de la seconde partie de forme annulaire - le diamètre extérieur de la partie cylindrique) est de +16% ou moins du diamètre extérieur de la partie cylindrique.

5. Dispositif vibrant selon l'une quelconque des revendications 1 à 3, dans lequel :
une partie vibrante comprenant le corps vibrant et le couvercle vibre dans un mode (0, 0).

6. Dispositif vibrant selon la revendication 5, dans lequel :
une différence obtenue à partir d'une formule de (le diamètre extérieur de la seconde partie de forme annulaire - le diamètre extérieur de la partie cylindrique) est de 0% ou plus et de 15% ou moins du diamètre extérieur de la partie cylindrique.

7. Dispositif vibrant selon l'une quelconque des revendications 1 à 3, dans lequel :
une partie vibrante comprenant le corps vibrant et le couvercle vibre dans un mode (0, 1).

8. Dispositif vibrant selon la revendication 7, dans lequel :
une différence obtenue à partir d'une formule de (le diamètre extérieur de la seconde partie de forme annulaire - le diamètre extérieur de la partie cylindrique) est aux environs de 0% du diamètre extérieur de la partie cylindrique ou dans une plage de 5% ou plus et de +15% ou moins de son diamètre extérieur.

9. Dispositif vibrant selon l'une quelconque des revendications 1 à 3, dans lequel :
une partie vibrante comprenant le corps vibrant et le couvercle vibre dans un mode (0, 2).

10. Dispositif vibrant selon la revendication 9, dans lequel :
une différence obtenue à partir d'une formule de (le diamètre extérieur de la seconde partie de forme annulaire - le diamètre extérieur de la partie cylindrique) est dans une plage de -6% ou plus et -4% ou moins du diamètre extérieur de la partie cylindrique ou dans une plage de 0% ou plus et +12% ou moins de son diamètre extérieur.

11. Dispositif vibrant selon l'une quelconque des revendications 1 à 10, dans lequel :
le diamètre extérieur de la partie cylindrique est égal à un diamètre extérieur de la première partie de raccordement.

12. Dispositif vibrant selon l'une quelconque des revendications 1 à 11, dans lequel :
la seconde partie de forme annulaire est une plaque vibrante en forme d'anneau.

13. Dispositif vibrant selon la revendication 12, dans lequel :
la seconde partie de forme annulaire est une bride qui fait saillie radialement vers l'extérieur à partir d'un bord circonférentiel externe de la seconde partie de raccordement.

14. Dispositif vibrant selon l'une quelconque des revendications 1 à 13, dans lequel :
un diamètre extérieur de l'élément piézoélectrique qui est formé comme un anneau est égal au diamètre extérieur de la partie cylindrique.

15. Dispositif vibrant selon l'une quelconque des revendications 1 à 14, dans lequel :
le couvercle est formé avec un élément de transmission de lumière.

16. Dispositif de détecteur optique comprenant :
le dispositif vibrant selon l'une quelconque des revendications 1 à 15 ; et
l'élément de détecteur optique qui est disposé dans au moins une partie d'un espace interne du corps vibrant en forme de cylindre du dispositif vibrant et a le champ de détection dans le couvercle.

17. Dispositif de détecteur optique selon la revendication 16, dans lequel :
l'élément de détecteur optique est un élément d'imagerie, et le champ de détection est un champ de vision.

18. Dispositif de détecteur optique selon la revendication 16, dans lequel :
l'élément de détecteur optique est un élément qui détecte, par voie optique, des faisceaux d'énergie d'activation.

19. Dispositif de détecteur optique selon la revendication 18,
dans lequel les faisceaux d'énergie d'activation sont au moins l'un parmi les faisceaux infrarouges et les ondes électromagnétiques.
